# EUROPÄISCHE PATENTSCHRIFT

(11) **EP 3 892 059 B1**
(45) Veröffentlichungstag und Bekanntmachung des Hinweises auf die Patenterteilung: **14.09.2022**
(21) Anmeldenummer: 19816607.6
(22) Anmeldetag: 03.12.2019
(51) Int. Cl.: H05B 1/02, H05B 3/74, H05B 6/12, A47J 39/02

(54) **EINRICHTUNG ZUR ELEKTRISCHEN REGELUNG DER TEMPERATUR VON BEHÄLTERN AUF PLATTENFÖRMIGEN UNTERLAGEN**
DEVICE FOR ELECTRICALLY REGULATING THE TEMPERATURE OF CONTAINERS ON PLANAR SUBSTRATES
DISPOSITIF DE RÉGULATION ÉLECTRIQUE DE LA TEMPÉRATURE DE RÉCIPIENTS SUR DES SUPPORTS DE FORME PLATE

(30) Priorität: 03.12.2018 DE 102018130735
(43) Veröffentlichungstag der Anmeldung: 13.10.2021
(73) Patentinhaber: Bol-Lifestyle GmbH, 5020 Salzburg (AT)
(72) Erfinder: BARTH, Alexander, 5020 Salzburg (AT); OBERMAYER, Thomas, 5020 Salzburg (AT)
(74) Vertreter: Grättinger Möhring von Poschinger Patentanwälte Partnerschaft mbB
(86) Internationale Anmeldenummer: PCT/EP2019/083415
(87) Internationale Veröffentlichungsnummer: WO 2020/115014

(56) Entgegenhaltungen:
- WO-A1-2015/062947
- WO-A1-2017/107888
- DE-A1-102008 054 904
- DE-A1-102012 109 656
- DE-B4-102009 058 271

## Beschreibung

Die Erfindung betrifft eine Einrichtung zur elektrischen Regelung der Temperatur von Behältern, insbesondere Geschirrteilen zur Vorlage von Speisen, auf plattenförmigen Unterlagen, insbesondere Tischplatten, wobei mit der Unterlage eine Senderspule und mit wenigstens einem Bodenteil eines Behälters eine Empfängerspule verbunden ist, derart, dass beide Spulen mittels Induktion zur elektromagnetischen Übertragung von Energie auf ein wärmeaustauschendes Element zum Erwärmen oder Kühlen des Behälters zusammenwirken.

Geräte mit Einrichtungen zur induktiven Übertragung elektrischer Energie sind allgemein bekannt (DE 102008054904 A1, WO 2015/062947 A1).

Bei einem bekannten induktiv beheizten Tellerwärmer (deutsche Reichspatentschrift Nr. 720377) befindet sich unterhalb der Aufsetzplatte des Tellerwärmers ein Elektromagnetsystem, welches Magnetpole umfasst, denen die Aufsetzplatte als magnetischer Rückschluss zugeordnet ist. Eine Verbesserung des Wirkungsgrades des magnetelektrischen Wärmeübergangs wird dadurch erzielt, dass der aus ferromagnetischem Material bestehenden Aufsetzplatte auf ihrer dem Elektromagnetsystem zugewandten Seite eine Zwischenschicht aus elektrisch gut leitfähigem Material mit Abstand von den Polflächen des Elektromagnetsystems angefügt ist.

Ferner ist ein Temperierungssystem für Materie mit einem Gefäß zur Aufnahme der Materie bekannt (DE 10 2009 058 271 B4) bekannt, wobei das Gefäß einen Gefäßboden für eine kontaktfreie Ankopplung von elektrischer Energie und deren Umwandlung in temperierende Wärme aufweist. In der Ankopplungsposition ist das Gefäß auf einer isolierenden Platte angeordnet, durch welche hindurch eine drahtlose induktive Kommunikationsverbindung zwischen einer Senderspule einerseits und einer mit dem Gefäßboden verbundenen Empfängerspule andererseits herstellbar ist. Die Leistungsregelung der zwischen den Spulen übertragenen elektromagnetischen Energie erfolgt dabei in Abhängigkeit von Positionssensoren und Thermosensoren sowie vorgegebenen oder einstellbaren Kühl- oder Wärmeanforderungen.

Dieses bekannte Temperierungssystem umfasst einen Indikator zur Anzeige der Ankopplung und Übertragung von elektromagnetischer Energie, wobei im Gefäßboden eine Ankopplungs- und Umwandlungsvorrichtung mit einem nachgeschalteten Zweiweggleichrichter vorgesehen sind, welcher Peltierelemente zur wahlweisen Wärmezufuhr oder Wärmeabfuhr mit Gleichstrom versorgt.

Demgegenüber liegt der vorliegenden Erfindung die Aufgabe zugrunde, eine Einrichtung der eingangs genannten Art mit geringem Energieverbrauch und niedrigen Herstellkosten zu schaffen, welche einen platzsparenden und werkstoffunabhängigen Einbau in unterschiedliche Produkte aus elektrisch nicht leitfähigen Werkstoffen der Möbelindustrie, der Gastronomie, der Küchenindustrie, für den Krankenhausbedarf und dergleichen Anwendungen des kontaktfreien Temperierens mittels marktüblicher elektronischer Bauteile ermöglicht.

Erfindungsgemäß wird diese Aufgabe gemäß dem Kennzeichen von Patentanspruch 1 gelöst.

Die Energieübertragung von der Senderspule zur Empfängerspule erfolgt dabei kabellos auf kurze Distanz mit einer Übertragungsfrequenz von über 100 kHz, bevorzugt nach Wahl eines globalen proprietären Industriestandards speziell zur Aufladung elektronischer Geräte z.B. von induktiven Mobiltelefonen od.dgl. Ein geeigneter, weit verbreiteter Industriestandard ist der sogenannte Qi Standard des Wireless Consortiums, ausgelegt für einen elektrischen Leistungsbereich zwischen 5 und 120 Watt und einem Frequenzbereich von 110 - 205 kHz. Weitere bekannte Industriestandards wie "Air Fuel" oder "A4WP" kommen ebenfalls in Frage.

Dabei ist die Auswahl eines geeigneten proprietären Standards die erforderliche Leistungsübertragung zu beachten, welche neben den Temperaturen im Behälter insbesondere von dessen Material abhängt.

Die genaue Positionierung des Behälters auf der Unterlage erfolgt erfindungsgemäß mittels Magneterkennung durch Anordnung von Magneten und/oder Elementen aus ferromagnetischen Werkstoffen einerseits im Bodenteil des Behälters und andererseits in der Unterlage, jeweils nahe ihren zugewandten Kontaktflächen.

Die erfindungsgemäß vorgeschlagene Einrichtung ermöglicht insbesondere die Integrierung der für die Energieübertragung durch induktive Kopplung vorgesehenen elektronischen Standartbauteile bei nur geringem Platzbedarf innerhalb eines für den jeweiligen Anwendungsfall geeigneten Behälters und einer zugehörigen Unterlage, ohne dass diese besonders voluminös oder mit unerwünscht massiven Wandstärken ausgeführt werden müssen. Die Integrierung ist somit ohne weiteres möglich in behälterförmigen Geschirrteilen sowie plattenförmigen Unterlagen wie Servierplatten zum Vorlegen von Essgeschirr und Geschirrteilen aus elektrisch nicht leitfähigen Werkstoffen wie beispielsweise Porzellan, Kunst- oder Naturstein, Holz, Akrylglas oder anderen Kunststoffen.

Als geeignete Unterlage zum Abstellen von Behältern kommen beispielsweise Auflagen auf Tischplatten infrage, an deren der Tischplatte zugewandten Seite ein oder mehreren Essplätzen zugeordnete Vertiefungen vorgesehen sind, welche jeweils der Aufnahme einer Senderspule mit zugehörigen elektronischen Anschlussteilen geeignet sind. Ferner können auf der Unterseite der Auflage offene Kabelkanäle eingearbeitet sein, welche mehrere derartige Vertiefungen miteinander verbinden indem sie die Verkabelung für die Energiezufuhr zu den Senderspulen aufnehmen.

Derartige Auflagen auf Tischplatten können vorteilhaft auch als starre oder flexible Auflagen ausgebildet sein, die auf üblichen Tischgestellen oder sonstigen festen Unterlagen positioniert werden können.

Um die Energieübertragung erfindungsgemäß für den Einsatz eines bekannten globalen Standards wie beispielsweise des Wireless Power Consortiums (vergleiche Qi-Standard gemäß Link https://www.wirelesspowerconsortium.com/technology/how-it-works.html) kabellos zu ermöglichen ist es vorteilhaft, den maximalen Abstand zwischen Senderspule und Empfängerspule möglichst gering, vorteilhaft zwischen 6 und 12mm zu bemessen; die erfindungsgemäße Einrichtung kann dabei mit einer maximalen Übertragungsleistung von etwa 20W bei einem hochfrequenten Magnetfeld ab ca. 100kHz auskommen. Im Testbetrieb hat sich gezeigt, dass sich die Kontaktflächen dabei nur etwa handwarm aufheizen, wobei auf der Behälterinnenseite Temperaturen bis etwa 60° Celsius problemlos erreichbar sind.

Für den Einbau der hierfür nach dem Qi-Standard oder einem anderen vergleichbaren Standard verwendeten elektronischen Bauteile können die erforderlichen Einbauräume entsprechend klein dimensioniert werden, so dass beispielsweise deren Unterbringung im Bodenteil eines Behälters problemlos möglich ist. Bei geeigneter Abdichtung der Verbindung zwischen Bodenteil und der Wand des Behälters können solche Behälter in Form beliebiger Geschirrteile ausgebildet und für die Behandlung in Geschirrspülmaschinen geeignet sein.

Als plattenförmige Unterlagen, auf welchen die mit Materie gefüllten Behälter zum Temperieren oder Abkühlen der Materie abgestellt werden, kommen generell solche aus nichtmetallischen, elektrisch nicht leitende Werkstoffen, beispielsweise in Form von Tischplatten, Servierplatten für Essgeschirr oder sonstige gesonderte Auflagen auf Tischplatten infrage, wobei die Energie zum Erwärmen bzw. Abkühlen des Behälters von der Senderspule auf die Empfängerspule im Behälter mittels eines hochfrequenten Magnetfelds innerhalb der übereinander angeordneten Kontaktflächen des Behälters und seiner Unterlage induktiv übertragen wird.

Die auf die Empfängerspule induktiv übertragene elektrische Energie wird über einen dieser zugeordneten im Behälter integrierten Gleichrichter in eine Gleichspannung gewandelt, welche mittels einer elektrischen Widerstandsheizung in Wärme umgesetzt und von der derart aufgewärmten Behälterwand auf den Behälterinhalt abgegeben wird.

Diese Gleichspannung kann auch zum Zwecke der Leistungssteuerung mittels einer Transistorschaltung als pulsweitengesteuerter Gleichstrom erzeugt sein.

Die erfindungsgemäße Einrichtung kann auch zum Kühlen von Materie im Behälter eingesetzt werden. In diesem Fall eignet sich anstelle eines ohmschen Heizelements ein PTC-Widerstand als sogenannter Kaltleiter, welcher durch seinen positiven Temperaturkoeffizienten den elektrischen Strom bei tiefen Temperaturen besser leitet als bei hohen Temperaturen, so dass mit steigendem Strom ein Abkühlen des im Behälter eingefüllten Materials erzielbar ist.

Eine weitere Alternative zum ohmschen Widerstand sind Peltierelemente, welche mittels induktiv übertragener Energie über einen nachgeschalteten Zweiweggleichrichter mit Gleichstrom versorgt werden.

Für die Funktion der erfindungsgemäßen Magneterkennung bei der Zuordnung der Kontaktflächen von Behälter und Unterlage ist vorteilhaft, dass die eingesetzten Magnete etwa konzentrisch um die jeweils zugeordnete Spule angeordnet sind. Vorteilhaft sind die Magnete als Magnetringe ausgebildet, so dass bei deren Annäherung ein gegenseitiger Zentriereffekt bei präziser Positionierung erzielbar ist.

Für die Praxis ist es von besonderem Vorteil, wenn die Behälter einen magnetisch ansteuerbaren Geber zum Einstellen einer gewünschten Solltemperatur aufweisen. Zusätzlich kann noch ein Mikrokontroller, bevorzugt im Behälterboden, zum Regeln der Temperatur des wärmeaustauschenden Elements vorgesehen sein.

Eine weitere vorteilhafte Ausgestaltung der erfindungsgemäßen Einrichtung besteht darin, dass in der Unterlage ein Akku als einzige oder zusätzliche Energiequelle vorgesehen ist, wodurch ein ortsunabhängiger Einsatz ermöglicht wird.

Im Folgenden werden Ausführungsbeispiele der Erfindung anhand der Zeichnung erläutert. Es zeigen:
- Figur 1: die erfindungsgemäße Einrichtung mit Behälter über einer Unterlage in der Draufsicht in perspektivischer Darstellung ihrer in vertikaler Richtung räumlich getrennten Bauteile,
- Figur 2: einen vergrößerten axialen Schnitt durch die Einrichtung gemäß Fig. 1 im Zusammenbau,
- Figur 3: eine Tischanordnung mit abgehobener plattenförmiger Auflage auf einem Tisch, jeweils in der Ansicht von unten, mit Teilen der Einrichtung gemäß Fig. 1.

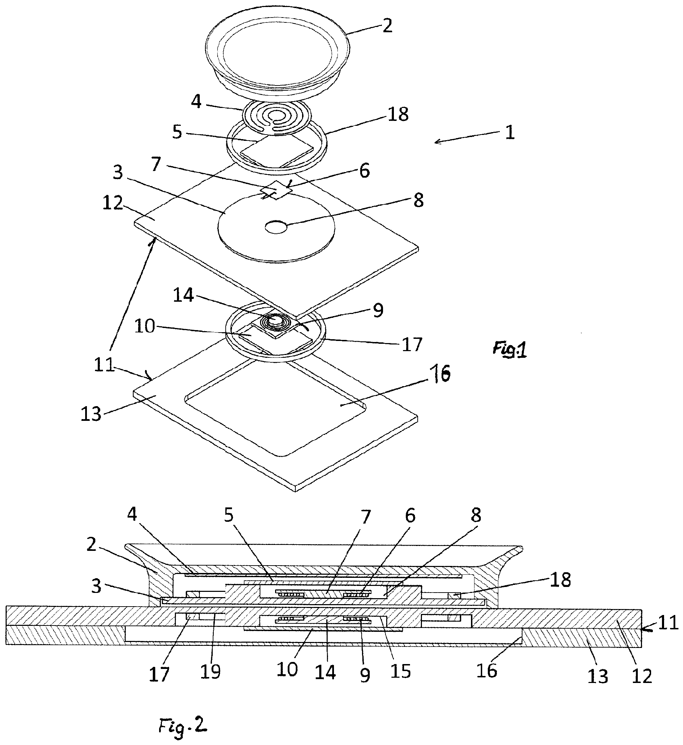

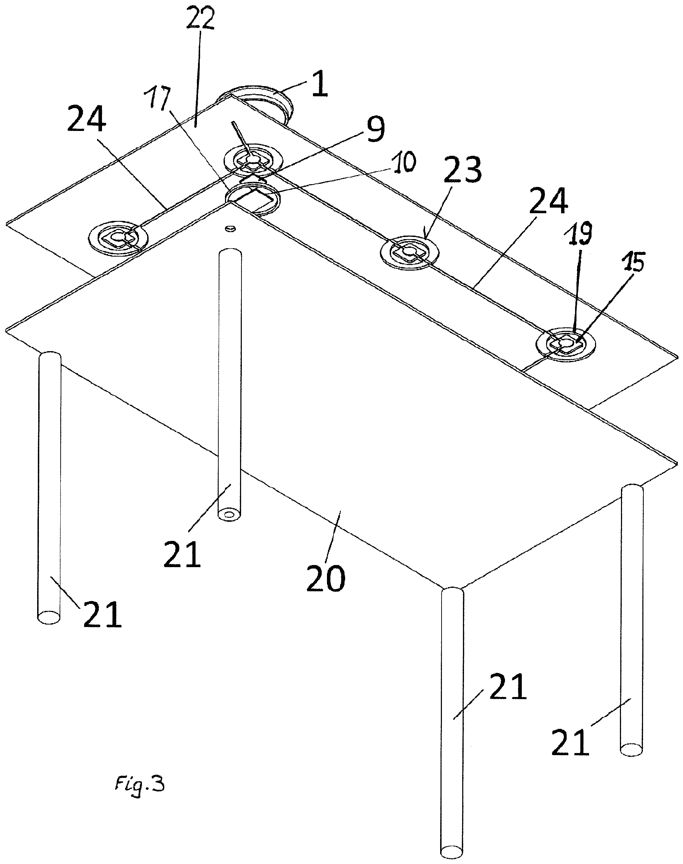

Die Figuren 1 und 3 der Zeichnung zeigen Ausführungsformen der erfindungsgemäßen Einrichtung jeweils in perspektivischer, vertikal getrennter Darstellung ihrer Einzelteile, umfassend einen Behälter 1 mit zugehöriger Unterlage 11.

Fig. 2 zeigt im Querschnitt die Unterlage 11 gemäß Fig. 1 mit dem dort in einer vertikalen Explosionsdarstellung gezeigten schüsselförmigen Behälter 1. Dieser umfasst neben einer Schüssel 2 zur Aufnahme von Speisen, die für eine Wärmebehandlung durch entsprechende Steuerung ihrer Temperatur vorgesehen sind, die hierfür vorgesehenen Bauteile, die zwischen Schüssel 2 und einem Bodenteil 3 im Inneren des fertig montierten Behälters 1 eingebaut sind. Dabei handelt es sich um ein wärmetauschendes Element, welches beispielhaft als elektrische Widerstandsheizung 4 ausgebildet ist, eine darunter angeordnete Empfängerelektronik 5 mit nicht näher dargestellten Mikro-Controller und Leistungsregler sowie eine Empfängerspule 6 auf einem Eisenkern 7, welche im montierten Zustand in einer zentralen kreisförmigen Tasche 8 des Bodenteils 3 Platz findet.

Da die Einzelteile für die drahtlose induktive Energieübertragung nicht nur bekannt, sondern für zahlreiche Anwendungen im Rahmen globaler Standards definiert sind, erübrigt sich eine nähere Beschreibung der elektronischen Grundlagen und Zusammenhänge. Insoweit kann auf die Ausführungen in der voranstehenden allgemeinen Beschreibung sowie auf die Merkmale der Patentansprüche Bezug genommen werden.

Die Empfängerspule 6 des Behälters 1 ist durch induktive Kopplung mit einer Senderspule 9 verbunden, welche mit zugehöriger Elektronikplatine 10 in einer Unterlage 11 zwischen deren Deckplatte 12 und deren Grundplatte 13 aufgenommen ist. Die Elektronikplatine 10 enthält einen nicht näher dargestellten Oszillator zum Erzeugen eines magnetischen Wechselfelds, so dass in der Empfängerspule 6 eine Wechselspannung induziert wird, welche über einen der Empfängerspule 6 zugeordneten Gleichrichter die Widerstandsheizung 4 mit einer Gleichspannung versorgt.

Fig. 2 zeigt die Anordnung der Senderspule 9 auf einem Eisenkern 14 innerhalb einer Vertiefung 15 in der Deckplatte 12 der Unterlage 11. Dicht darunter, in eine Vertiefung 16 der Grundplatte 13 hineinragend ist die Elektronikplatine 10 der Senderspule 9 befestigt.

Ein Magnetring 17, untergebracht in einer in der Deckplatte 12 gebildeten Ringnut 19, welche zur Grundplatte 13 hin offen ist, dient zusammen mit einem entsprechenden Magnetring 18 über dem Bodenteil 3 des Behälters 1 der genauen Positionierung des lose auf der Deckplatte 12 der Unterlage 11 abgestellten Behälters 1, so dass die beiden Spulen 6, 9 dicht übereinander angeordnet sind. Leistungsverluste der Stromübertragung infolge der induktiven Kopplung können dadurch entsprechend reduziert werden. Dadurch, dass der Magnetring 17 in der Ringnut 19 nahe der Oberseite der Deckplatte 12 angeordnet ist, wird die fehlerfreie Magneterkennung zwischen den beiden Magnetringen 17, 18 gewährleistet, wobei gleichzeitig der Zentrierung dienende Magnetkräfte nutzbar werden.

Die in den Figuren 1 und 2 erkennbare Zuordnung der einzelnen Bauteile auf Seiten der Senderspule 9 innerhalb der Unterlage 11 und der Empfängerspule 6 innerhalb des Bodenteils 3 des Behälters 1 wiederholt sich bei der Ausführungsform mit einer tischförmigen Unterlage gemäß Fig. 3. Diese zeigt eine Mehrzahl von Kopplungspositionen zwischen einer tragenden Unterlage in Form einer neutralen Tischplatte 20, wie sie üblicherweise an einem Esstisch vorhanden ist, an deren Unterseite die Tischbeine 21 befestigt sind und einer Auflage 22 auf der Tischplatte 20. Die Auflage 22 ist passend zur Tischplatte 20 ausgebildet und besitzt auf ihrer Unterseite Vertiefungen 23 in denen jeweils eine Senderspule 9 mit zugehörigen Elektronikbauteilen aufgenommen ist. Auf der Auflage 22 können mehrere Behälter 1 jeweils über eine Vertiefung 23 positioniert werden, so dass jede Senderspule 9 einer Empfangsspule 6 zugeordnet ist. Die Auflage 22 kann infolge ihrer vollflächigen Abstützung auf der Tischplatte 20 eine besonders geringe Dicke aufweisen, so dass die induktive Kopplung bei geringen elektrischen Leistungen, etwa in der Größenordnung um 20 Watt möglich ist. Die Plattenstärke der Auflage 22 kann hier besonders gering, etwa bei 6 mm sein, was ein Arbeiten mit minimalen Übertragungsleistungen, sogar unter 20 Watt ermöglicht. Die einzelnen Kopplungsplätze über den Vertiefungen 23 sind über Kabelkanäle 24 zur Aufnahme der Verkabelung für die Energiezufuhr miteinander verbunden, welche auf der Unterseite der Auflage 22 eingetieft sind. Die Energiezufuhr erfolgt üblicherweise bei geringen Spannungen, etwa in der Größenordnung von 20 Volt, so dass der Energieaufwand und die auftretenden Wärmeverluste sehr gering anzusetzen sind. Anstelle einer starren Platte kann die Auflage 22 auch aus einem flexiblen Material als dünne Kunststoffmatte ausgebildet sein, wobei die Integration der elektronischen Bauteile vorteilhaft durch Vergießen mit einem geeigneten Kunststoff erfolgen kann.

## Patentansprüche

1. Einrichtung zur elektrischen Regelung der Temperatur von Behältern (1), insbesondere Geschirrteilen zur Vorlage von Speisen, auf plattenförmigen Unterlagen (11), insbesondere Tischplatten, wobei mit der Unterlage (11) eine Senderspule (9) und mit wenigstens einem Bodenteil (3) eines Behälters (1) eine Empfängerspule (6) verbunden ist, derart, dass beide Spulen mittels induktiver Kopplung zur elektromagnetischen Übertragung von Energie auf ein wärmetauschendes Element zum Erwärmen oder Kühlen des Behälters (1) zusammenwirken, wobei von der Senderspule (9) mittels eines Oszillators ein magnetisches Wechselfeld erzeugt und in der Empfängerspule (6) eine Wechselspannung induziert wird, welche über einem Gleichrichter als Gleichspannung dem wärmetauschenden Element (4) zugeführt wird,
**dadurch gekennzeichnet,**
**dass** die Energieübertragung von der Senderspule (9) zur Empfängerspule (6) kabellos auf kurze Distanz mit einer Übertragungsfrequenz von über 100 KHz mit einer übertragenen elektrischen Leistung zwischen 5 und 80 Watt mittels induktiver Kopplung erfolgt
und **dass** die Positionierung des Behälters (1) auf der Unterlage mittels Magneterkennung durch Anordnung von Magneten im Bodenteil (3) des Behälters (1) und in der Unterlage (11), jeweils nahe ihren zugewandten Kontaktflächen erfolgt.

2. Einrichtung nach Anspruch 1,
**dadurch gekennzeichnet,**
**dass** als globaler Standard der des Wireless Power Consortiums (Qi-Standard) unterstützt wird.

3. Einrichtung nach Anspruch 1,
**dadurch gekennzeichnet,**
**dass** sie als Heizsystem ausgebildet ist, wobei im Bodenteil (3) des Behälters (1) als wärmetauschendes Element eine elektrische Widerstandsheizung (4) über den Gleichrichter nachgeschaltet ist.

4. Einrichtung nach Anspruch 1,
**dadurch gekennzeichnet,**
**dass** der maximale Abstand zwischen Senderspule (9) und Empfängerspule (6) zwischen 6 und 12 mm beträgt.

5. Einrichtung nach Anspruch 1,
**dadurch gekennzeichnet,**
**dass** Senderspule (9) und Empfängerspule (6) jeweils mit ihren elektronischen Anschlussteilen im Bodenteil (3) des Behälters (1) bzw. in der Unterlage (11) integriert eingebaut sind.

6. Einrichtung nach Anspruch 5,
**dadurch gekennzeichnet,**
**dass** die Einbaulage der Spulen (6; 9) gegenüber der Umgebung dichtend ausgebildet ist.

7. Einrichtung nach Anspruch 1,
**dadurch gekennzeichnet,**
**dass** die Senderspule (9) mit ihren elektronischen Anschlussteilen innerhalb einer gesonderten Auflage (22) einer Tischplatte (20) angeordnet ist.

8. Einrichtung nach Anspruch 7,
**dadurch gekennzeichnet,**
**dass** die Auflage (22) als Matte aus einem flexiblen elektrisch isolierendem Werkstoff ausgebildet ist.

9. Einrichtung nach Anspruch 1,
**dadurch gekennzeichnet,**
**dass** die der Positionierung dienenden Magnete etwa konzentrisch um die jeweils zugeordnete Spule angeordnet sind.

10. Einrichtung nach Anspruch 9,
**dadurch gekennzeichnet,**
**dass** die Magnete als Magnetringe (17, 18) ausgebildet sind.

11. Einrichtung nach einem oder mehreren der vorstehenden Ansprüche,
**dadurch gekennzeichnet,**
**dass** der Behälter (1) einen magnetisch ansteuerbaren Geber zum Einstellen seiner Solltemperatur aufweist.

12. Einrichtung nach Anspruch 11,
**dadurch gekennzeichnet,**
**dass** der Behälter (1) ferner einen Microcontroller zum Regeln der Temperatur des wärmetauschenden Elements aufweist.

13. Einrichtung nach Anspruch 1,
**dadurch gekennzeichnet,**
**dass** in der Unterlage (11) und/oder dem Bodenteil (3) ein Akku als einzige oder zusätzliche Energiequelle vorgesehen ist.

14. Einrichtung nach Anspruch 1,
**dadurch gekennzeichnet,**
**dass** die Unterlage durch eine Auflage (22) einer Tischplatte (20) gebildet ist, an deren der Kontaktfläche abgewandten Seite ein oder mehreren Essplätzen zugeordnete Vertiefungen (23) vorgesehen sind, welche jeweils der Aufnahme einer Senderspule (9) mit zugehörigen elektronischen Anschlussteilen geeignet sind.

15. Einrichtung nach Anspruch 14,
**dadurch gekennzeichnet,**
**dass** ferner nach unten offene Kabelkanäle (24) in die Unterseite der Auflage (22) eingefräst sind, welche mehrere Vertiefungen miteinander verbinden.

## Claims

1. A device for electrically regulating the temperature of containers (1), in particular items of crockery for presenting food, on plate-shaped substrates (11), in particular table tops, wherein a transmitter coil (9) is connected to the substrate (11) and a receiver coil (6) is connected to at least one bottom part (3) of a container (1) such that the two coils cooperate by means of inductive coupling for the electromagnetic transmission of energy to a heat-exchanging element to heat or cool the container (1), wherein a magnetic alternating field is generated by the transmitter coil (9) by means of an oscillator and an alternating voltage is induced in the receiver coil (6), said alternating voltage being supplied via a rectifier as DC voltage to the heat exchanging element (4),
**characterized in that**
the energy transmission from the transmitter coil (9) to the receiver coil (6) takes place wirelessly over a short distance at a transmission frequency of over 100 KHz with a transmitted electrical power of between 5 and 80 watts by means of inductive coupling
and **in that** the positioning of the container (1) on the substrate takes place by means of magnetic detection, by arranging magnets in the bottom part (3) of the container (1) and in the substrate (11), in each case in the vicinity of the contact surfaces thereof which face one another.

2. The device according to Claim 1,
**characterized in that**
as a global standard, that of the Wireless Power Consortium (Qi-Standard) is supported.

3. The device according to Claim 1,
**characterized in that**
it is configured as a heating system, wherein an electrical resistance heater (4) is connected downstream via the rectifier in the bottom part (3) of the container (1) as a heat exchanging element.

4. The device according to Claim 1,
**characterized in that**
the maximum spacing between the transmitter coil (9) and the receiver coil (6) is between 6 and 12 mm.

5. The device according to Claim 1,
**characterized in that**
the transmitter coil (9) and the receiver coil (6) are installed in each case so as to be integrated with their electronic connecting parts in the bottom part (3) of the container (1) or in the substrate (11).

6. The device according to Claim 5,
**characterized in that**
the installed position of the coils (6; 9) is configured to be sealed relative to the surroundings.

7. The device according to Claim 1,
**characterized in that**
the transmitter coil (9) is arranged with the electronic connecting parts thereof inside a separate support (22) of a table top (20).

8. The device according to Claim 7,
**characterized in that**
the support (22) is configured as a mat made of a flexible electrically insulating material.

9. The device according to Claim 1,
**characterized in that**
the magnets which serve for the positioning are arranged approximately concentrically about the respectively assigned coil.

10. The device according to Claim 9,
**characterized in that**
the magnets are configured as magnetic rings (17, 18).

11. The device according to one or more of the preceding claims,
**characterized in that**
the container (1) has a magnetically controllable sensor for adjusting the target temperature thereof.

12. The device according to Claim 11,
**characterized in that**
the container (1) also has a microcontroller for regulating the temperature of the heat-exchanging element.

13. The device according to Claim 1,
**characterized in that**
a battery is provided in the substrate (11) and/or the bottom part (3) as a single or additional energy source.

14. The device according to Claim 1,
**characterized in that**
the substrate is formed by a support (22) of a table top (20), recesses (23) assigned to one or more dining areas being provided on the side of said table top remote from the contact surface, said recesses in each case being suitable for receiving a transmitter coil (9) with associated electronic connecting parts.

15. The device according to Claim 14,
**characterized in that**
downwardly open cable ducts (24), which connect a plurality of recesses to one another, are also milled into the lower face of the support (22).

## Revendications

1. Dispositif de régulation électrique de la température de récipients (1), en particulier d'éléments de vaisselle pour la présentation d'aliments, sur des socles en forme d'assiette (11), en particulier des plateaux de table, dans lequel une bobine émettrice (9) est reliée au socle (11) et une bobine réceptrice (6) est reliée à au moins une partie inférieure (3) d'un récipient (1) de telle manière que les deux bobines interagissent au moyen d'un couplage inductif pour la transmission électromagnétique de l'énergie à un élément échangeur de chaleur pour chauffer ou refroidir le récipient (1), dans lequel un champ magnétique alternatif est généré par la bobine émettrice (9) au moyen d'un oscillateur et une tension alternative est induite dans la bobine réceptrice (6), qui est introduite via un redresseur en tant que tension continue dans l'élément échangeur de chaleur (4),
**caractérisé en ce que**
la transmission d'énergie de la bobine émettrice (9) à la bobine réceptrice (6) a lieu sans fil sur une courte distance avec une fréquence de transmission supérieure à 100 KHz avec une puissance électrique transmise comprise entre 5 et 80 watts au moyen d'un couplage inductif
et que le positionnement du récipient (1) sur le socle au moyen d'une détection magnétique en disposant des aimants dans la partie inférieure (3) du récipient (1) et dans le socle (11), a lieu respectivement à proximité de leurs surfaces de contact en regard.

2. Dispositif selon la revendication 1,
**caractérisé en ce que**
la norme mondiale du Wireless Power Consortium (norme Qi) est prise en charge.

3. Dispositif selon la revendication 1,
**caractérisé en ce qu'**
il est réalisé sous la forme d'un système de chauffage, dans lequel dans la partie inférieure (3) du récipient (1) en tant qu'élément échangeur de chaleur, une résistance électrique chauffante (4) est connectée en aval via le redresseur.

4. Dispositif selon la revendication 1,
**caractérisé en ce que**
la distance maximale entre la bobine émettrice (9) et la bobine réceptrice (6) est comprise entre 6 et 12 mm.

5. Dispositif selon la revendication 1,
**caractérisé en ce que**
les bobines émettrice (9) et réceptrice (6) sont respectivement intégrées avec leurs éléments de connexion électronique dans la partie inférieure (3) du récipient (1) ou dans le socle (11).

6. Dispositif selon la revendication 5,
**caractérisé en ce que**
la position d'installation des bobines (6 ; 9) est conçue pour être étanche vis-à-vis de l'environnement.

7. Dispositif selon la revendication 1,
**caractérisé en ce que**
la bobine émettrice (9) avec ses éléments de connexion électroniques est disposée à l'intérieur d'un socle séparé (22) d'un plateau de table (20).

8. Dispositif selon la revendication 7,
**caractérisé en ce que**
le socle (22) est réalisé sous la forme d'un tapis en un matériau souple électriquement isolant.

9. Dispositif selon la revendication 1,
**caractérisé en ce que**
les aimants utilisés pour le positionnement sont disposés sensiblement concentriquement autour des aimants respectivement associés.

10. Dispositif selon la revendication 9,
**caractérisé en ce que**
les aimants sont réalisés sous forme d'anneaux magnétiques (17, 18).

11. Dispositif selon une ou plusieurs des revendications précédentes,
**caractérisé en ce que**
le récipient (1) présente un codeur à commande magnétique pour régler sa température de consigne.

12. Dispositif selon la revendication 11,
**caractérisé en ce que**
le récipient (1) comprend en outre un microcontrôleur pour contrôler la température de l'élément échangeur de chaleur.

13. Dispositif selon la revendication 1,
**caractérisé en ce que**
dans le socle (11) et/ou la partie inférieure (3) une batterie est prévue en tant que batterie unique ou supplémentaire.

14. Dispositif selon la revendication 1,
**caractérisé en ce que**
la base est formée par un socle (22) d'un plateau de table (20), sur le côté duquel tourné à l'opposé de la surface de contact une ou plusieurs évidements (23) affectés à des places de restauration sont prévus, dont chacun est adapté pour renfermer une bobine émettrice (9) avec des éléments de connexion électronique associés.

15. Dispositif selon la revendication 14,
**caractérisé en ce que**
des conduits de câble (24) ouverts vers le bas, qui relient plusieurs évidements entre eux sont fraisés dans la face inférieure du socle (22).
